# EUROPÄISCHE PATENTSCHRIFT

(11) **EP 1 831 045 B1**
(45) Veröffentlichungstag und Bekanntmachung des Hinweises auf die Patenterteilung: **13.01.2016**
(21) Anmeldenummer: 05811021.4
(22) Anmeldetag: 24.10.2005
(51) Int. Cl.: B60W 20/00, B60W 10/06, B60W 10/08

(54) **VERFAHREN ZUM BETREIBEN EINES HYBRIDFAHRZEUGS**
METHOD FOR OPERATING A HYBRID MOTOR VEHICLE
PROCEDE POUR FAIRE FONCTIONNER UN VEHICULE HYBRIDE

(30) Priorität: 23.12.2004 DE 102004062012
(43) Veröffentlichungstag der Anmeldung: 12.09.2007
(73) Patentinhaber: ROBERT BOSCH GMBH, 70442 Stuttgart (DE)
(72) Erfinder: FALKENSTEIN, Jens-Werner, 73434 Aalen (DE)
(86) Internationale Anmeldenummer: PCT/EP2005/055476
(87) Internationale Veröffentlichungsnummer: WO 2006/069833

(56) Entgegenhaltungen:
- EP-A- 0 901 630
- EP-A- 1 273 822
- DE-A1- 10 325 262
- DE-A1- 19 709 134
- DE-A1- 19 721 298
- DE-A1- 19 939 250
- US-B1- 6 336 070

## Beschreibung

### Stand der Technik

Die Erfindung geht aus von einem Verfahren zum Betreiben eines Hybridfahrzeugantriebs nach dem Oberbegriff des Anspruchs 1.

Bei modernen Kraftfahrzeugantrieben kommen Steuerungsfunktionen und Steuerungsalgorithmen zum Einsatz, die Rückführungen von Aggregatedrehzahlen oder daraus abgeleiteter Signale auf die Drehmomente der Aggregate enthalten. Dies ist z.B. bei der Leerlaufregelung bzw. Drehzahlregelung eines Verbrennungsmotors der Fall. Ebenso erfolgt bei der so genannten aktiven Ruckeldämpfung eine Korrektur des Verbrennungsmotormoments basierend auf den periodischen Drehzahlschwankungen des Verbrennungsmotors. Bei ansteigender Drehzahl wird das Drehmoment des Verbrennungsmotors reduziert, bei abfallender Drehzahl erhöht, wodurch sich eine Dämpfung von Ruckel- bzw. Antriebsstrangschwingungen ergibt.

Bei entsprechenden Rückführungen von Aggregatedrehzahlen oder daraus abgeleiteter Signale auf Aggregatedrehmomente ist auf eine geringe zeitliche Verzögerung zwischen Drehzahlerfassung und Drehmomentbeeinflussung zu achten. Zeitverzögerungen bzw. Totzeiten reduzieren bei gleich bleibender Stabilitätsreserve die in den Rückführzweigen möglichen Verstärkungen. Damit werden die Wirkungen von z.B. Drehzahlregelung bzw. aktiver Ruckeldämpfung begrenzt.

In das Drehmoment eines bei Kraftfahrzeugen üblichen Hub- bzw. Rotationskolbenmotors kann nur zu den Zeitpunkten der einzelnen Zündungen bzw. Verbrennungen eingegriffen werden. Im Steuergerät des Verbrennungsmotors erfolgen die Erfassung der Verbrennungsmotordrehzahl und die Berechnung von Algorithmen zur Drehzahlregelung bzw. aktiven Ruckeldämpfung meist zeitlich synchronisiert zu den einzelnen Zündungen bzw. Verbrennungen, wodurch sich geringe Verzögerungen ergeben.

Moderne Ottomotoren mit Saugrohreinspritzung besitzen eine elektronische Drosselklappe zur Luftmassenstromregulierung. Das Fahrpedal ist von der elektronischen Drosselklappe mechanisch entkoppelt. Das Drehmoment des Ottomotors kann durch Beeinflussung der Drosselklappe und des Zündwinkels von der Motorsteuerung vorgegeben werden, das eines Dieselmotors durch die Wahl der Einspritzparameter. Die Motorsteuerung ermittelt das momentane Istdrehmoment auf der Basis von gemessenen oder abgeschätzten Größen, beim Ottomotor mit Saugrohreinspritzung z.B. aus Motordrehzahl, Saugrohrdruck, Zündzeitpunkt und Luftzahl A.

Hybridantriebe für Kraftfahrzeuge enthalten neben dem Verbrennungsmotor eine oder mehrere Elektromaschinen. So erfolgt bei Parallelhybriden eine Addition der Drehmomente von Verbrennungsmotor und wenigstens einer Elektromaschine. Die Elektromaschine ist z.B. als Startergenerator mit dem Riementrieb oder mit der Kurbelwelle des Verbrennungsmotors verbunden.

Die bei Hybridfahrzeugen eingesetzten Elektromaschinen besitzen meist Steuerungen, die nach dem Prinzip der Abtastregelung mit zeitsynchroner Drehzahlerfassung und einem zeitsynchronen Berechnungstakt der Steuerungsalgorithmen arbeiten. Eingriffe in die Drehmomente der Elektromaschinen sind somit ebenfalls zeitsynchron möglich.

Meist kommen ein Steuergerät für den Verbrennungsmotor und ein Steuergerät für die Elektromaschine zum Einsatz, die über ein Bussystem miteinander kommunizieren. Beim Datenaustausch über das Bussystem sind Zeitverzögerungen vorhanden, zusätzlich zu den Zeitverzögerung bedingt durch unterschiedliche Berechnungstakte (zu Zündungen bzw. Verbrennungen synchroner Berechnungstakt für den Verbrennungsmotor und zeitsynchroner Berechnungstakt für die Elektromaschine).

Die DE 198 39 315 A1 offenbart ein Antriebssystem für ein Hybridfahrzeug, bei dem eine Elektromaschine mit einem Verbrennungsmotor gekoppelt und dazu eingerichtet ist, beim Aktivieren und/oder Deaktivieren der Schubabschaltung den damit einhergehenden Beschleunigungsruck durch Aufbringen eines Drehmoments zu vermindern, wobei die rückvermindernde Wirkung der Elektromaschine durch ein Aktivierungs- bzw. Deaktivierungssignal der Schubabschaltung gesteuert wird.

Die gattungsbildende Offenlegungsschrift DE 199 39 250 A1 offenbart weiterhin ein Verfahren und eine Vorrichtung zur Dämpfung von Drehschwingungen eines Verbrennungsmotors, wobei nach dem Prinzip der lernenden Störgrößenaufschaltung Drehschwingungen eines Verbrennungsmotors durch eine Elektromaschine kompensiert werden. Dabei werden das Drehmoment des Verbrennungsmotors und das Drehmoment der Elektromaschine jeweils durch ihre Drehzahl oder ein daraus abgeleitetes Signal beeinflusst.

### Vorteile der Erfindung

Es wird ein Verfahren mit den Merkmalen des Anspruchs 1 vorgeschlagen, wobei ein Drehmoment eines Verbrennungsmotors durch seine Drehzahl oder ein daraus abgeleitetes Signal beeinflusst wird und zusätzlich ein Drehmoment der Elektromaschine durch ihre Drehzahl oder ein daraus abgeleitetes Signal beeinflusst wird. Damit kann das Erfassen der Drehzahlen sowie die darauf basierende Beeinflussung der Drehmomente in den für eine geringe zeitliche Verzögerung jeweils günstigsten Berechnungstakten erfolgen. Dies wird weiter verstärkt, wenn eine Rückführung der Drehzahlen des Verbrennungsmotors und der Elektromaschine in parallelen Regelschleifen erfolgt.

Geringe Zeitverzögerungen und eine hohe Bandbreite werden ermöglicht, wenn die Rückführung der Drehzahlen außerhalb eines Datenbussystems erfolgt, mit dem ein Steuergerät des Verbrennungsmotors mit einem Steuergerät der Elektromaschine kommuniziert.

Erfindungsgemäß erfolgt eine Drehzahlregelung des Verbrennungsmotors mit einem Proportional-Integralregler und die Drehzahlregelung der Elektromaschine mit einem Proportionalregler. Bevorzugt werden Verstärkungsfaktoren für einen jeweiligen Proportionalanteil des Proportional-Integralreglers und des Proportionalreglers mittels einer übergeordneten Koordination eingestellt. Somit können die Vorgaben an einen momentanen Zustand des Antriebsstrangs angepasst werden. Günstig ist, wenn die Verstärkungsfaktoren anhand momentan verfügbarer Drehmomentreserven des Verbrennungsmotors und/oder der Elektromaschine eingestellt werden.

Vorteilhaft ist, wenn ein Integralanteil des Proportional-Integralreglers betriebszustandsabhängig initialisiert oder gesperrt werden kann. Für jeden Betriebszustand, z.B. Drehzahlregelung oder Ruckeldämpfung, kann ein geeignetes Reglerverhalten eingestellt werden. Es werden vorzugsweise beim Verlassen der Drehzahlregelung die Verstärkungsfaktoren auf Null gesetzt und der Integralanteil initialisiert.

Bevorzugt werden zur Ruckeldämpfung die Istdrehzahlen von Verbrennungsmotor und Elektromaschine über Differential-Elemente mit Verzögerung erster Ordnung oder mehrfach differenzierende Elemente mit Verzögerung mehrfacher Ordnung zurückgeführt und auf die jeweiligen Solldrehmomente aufgeschaltet. Dies kann mit geringer Zeitverzögerung und mit hoher Bandbreite erfolgen.

Die Ruckeldämpfung im Betriebszustand der Drehzahlregelung kann wahlweise abgeschaltet oder zugeschaltet werden. Unerwünschte Relativschwingungen zwischen Verbrennungsmotor und Elektromaschine können vermieden werden. Dazu ist es vorteilhaft, wenn die Verstärkungen der Differential-Elemente mit Verzögerung erster Ordnung oder Verstärkungen der mehrfach differenzierenden Elemente mit Verzögerung mehrfacher Ordnung mittels einer übergeordneten Koordination abhängig vom Zustand des Antriebsstrangs eingestellt werden.

Es ist günstig, wenn zur Unterstützung des Verbrennungsmotors durch die Elektromaschine ein aus Solldrehmoment und Istdrehmoment des Verbrennungsmotors gebildetes Differenzdrehmoment über einen Tiefpassfilter das Drehmoment der Elektromaschine beeinflusst.

### Zeichnung

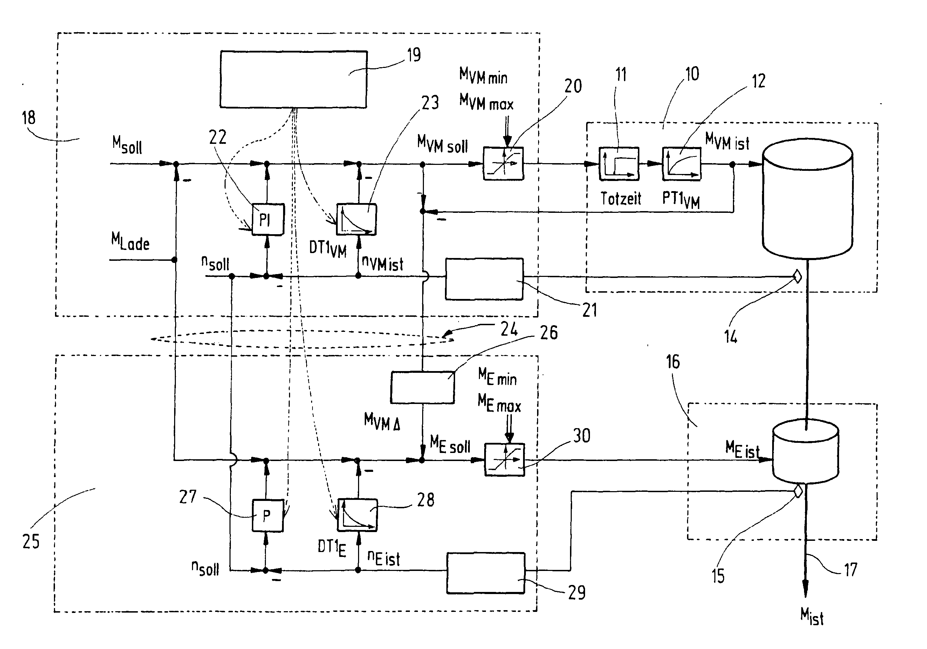

Die Erfindung wird nachfolgend in einem Ausführungsbeispiel anhand der zugehörigen Zeichnung näher erläutert. Die einzige Figur zeigt schematisch ein Blockschaltbild zur Durchführung des erfindungsgemäßen Verfahrens.

### Beschreibung des Ausführungsbeispiels

In der Figur ist ein Ausführungsbeispiel als Blockschaltbild für die Erfindung dargestellt. Bevorzugt wird zur Drehzahlregelung bzw. aktiven Ruckeldämpfung das Drehmoment eines Verbrennungsmotors 10 durch die Drehzahl des Verbrennungsmotors 10 oder ein daraus abgeleitetes Signal beeinflusst und zusätzlich das Drehmoment mindestens einer Elektromaschine 16 durch die Drehzahl der Elektromaschine 16 oder ein daraus abgeleitetes Signal beeinflusst.

Damit können die Erfassungen der Drehzahlen und die darauf basierenden Beeinflussungen der Drehmomente in für eine geringe zeitliche Verzögerung jeweils günstigsten Berechnungstakten erfolgen, beim Verbrennungsmotor 10 z.B. synchron zu Zündungen bzw. Verbrennungen, bei Elektromaschine(n) 16 zeitsynchron. Die Wirkungen bzw. Verstärkungsfaktoren einzelner Drehzahlrückführungen werden mittels einer übergeordneter Koordination 19, z.B. anhand von momentanen Drehmomentreserven von Verbrennungsmotor 10 und Elektromaschine 16, eingestellt.

Ein als Ottomotor ausgebildeter Verbrennungsmotor 10 ist mit Saugrohreinspritzung, elektronischem Gaspedal ("EGas", elektronische Drosselklappe) und Katalysator versehen (nicht dargestellt).

Ein nicht dargestelltes Schwungrad des Verbrennungsmotors 10 ist verdrehsteif mit einer Elektromaschine 16 gekoppelt. Istdrehmomente M_{VM ist}, M_{E ist} des Verbrennungsmotors 10 und der Elektromaschine 16 addieren sich im stationären Betrieb zu einem an einem Abtrieb 17 verfügbaren Istdrehmoment Mᵢₛₜ des gesamten Antriebs, d.h. zum Summendrehmoment von Verbrennungsmotor 10 und Elektromaschine 16. Dem Verbrennungsmotor 10 und der Elektromaschine 16 ist jeweils ein Steuergerät 18, 25 zugeordnet, beide Steuergeräte 18 und 25 kommunizieren über ein Bussystem 24. Der Verbrennungsmotor 10 und die Elektromaschine 16 besitzen jeweils einen Drehzahlgeber 14 und 15. Das entsprechende Steuergerät 18 bzw. 25 ermittelt mit Hilfe einer Geberauswertung 21 bzw. 29 eine Istdrehzahl n_{VM ist} des Verbrennungsmotors 10 bzw. die Istdrehzahl n_{E ist} der Elektromaschine 16. Das Solldrehmoment M_{VM soll} des Verbrennungsmotors 10 wird im Steuergerät 18 des Verbrennungsmotors 10 den physikalischen Grenzen entsprechend durch den Begrenzer 20 limitiert. Durch dynamische Füllungseffekte im Saugrohr, modelliert als Totzeitglied 11 und Verzögerungsglied 12 erster Ordnung (PT1_{VM}), folgt das Istdrehmoment M_{VM} ist nur verzögert. Eine Momentenreduktion kann durch Zündwinkeleingriff beschleunigt werden.

Ein Begrenzer 30 limitiert das Solldrehmoment M_{E soll} der Elektromaschine 16 basierend auf den physikalischen Grenzen der Elektromaschine 16 und eines nicht dargestellten elektrischen Energiespeichers. Eine Drehmomentansteuerung der Elektromaschine 16 wird näherungsweise als verzögerungsfrei angenommen.

Eine übergeordnete Steuerung (nicht dargestellt) gibt ein Antriebssollmoment Mₛₒₗₗ für den gesamten Antrieb vor. Mit einem Lade-Sollmoment M_{Lade} ist ein Eingriff vorgesehen, der die Versorgung eines nicht dargestellten Bordnetzes und des elektrischen Energiespeichers sicherstellt. Bei negativem M_{Lade} geht die Elektromaschine 16 in den generatorischen Betrieb, das Solldrehmoment des Verbrennungsmotors 10 wird entsprechend erhöht, um die Last der Elektromaschine 16 auszugleichen.

Die Drehzahlregelung besteht aus einem als Proportional-Integralregler (PI) ausgebildeten Regler 22 im Steuergerät 18 des Verbrennungsmotors 10 und einem als Proportionalregler (P) ausgebildeten Regler 27 im Steuergerät 25 der Elektromaschine 16. Der gemeinsame Drehzahlsollwert nₛₒₗₗ für Verbrennungsmotor 10 und Elektromaschine 16 wird über das Bussystem 24 vom Steuergerät 18 des Verbrennungsmotors 10 an das Steuergerät 25 der Elektromaschine 16 übermittelt. In beiden Steuergeräten 18 und 25 erfolgt ein Vergleich der jeweiligen Istdrehzahl n_{VM} ist bzw. n_{E} ist mit der Solldrehzahl nₛₒₗₗ. Bei Drehzahlabweichungen addieren sich die Wirkungen des Proportional-Anteils des PI-Reglers 22 im Steuergerät 18 des Verbrennungsmotors 10 und des P-Reglers 27 im Steuergerät 25 der Elektromaschine 16.

Beide Regelschleifen arbeiten parallel und in den jeweils optimalen Berechnungstakten. Sie sind nicht über das Bussystem 24 geschlossen, was geringe Zeitverzögerungen und damit hohe Bandbreiten ermöglicht. Eine Koordination 19 gibt die Verstärkungsfaktoren für den Proportional-Anteil des PI-Reglers 22 im Steuergerät 18 des Verbrennungsmotors 10 und den P-Regler 27 im Steuergerät 25 der Elektromaschine 16 vor. Die Vorgaben sind dem momentanen Zustand des Antriebsstrangs angepasst.

Da genau ein Drehzahlfreiheitsgrad vorhanden ist, wird nur ein Integral-Anteil eingesetzt. Der Integral-Anteil des PI-Reglers 22 im Steuergerät 18 des Verbrennungsmotors 10 wirkt auf das Solldrehmoment M_{VM soll} des Verbrennungsmotors 10. Damit gleicht der Verbrennungsmotor 10 im stationären Betrieb Ungenauigkeiten des Systems, z.B. infolge von temperaturabhängigen Reibverhältnissen, aus. Die Istdrehzahlen n_{VM} ist bzw. n_{E} ist nähern sich der Solldrehzahl nₛₒₗₗ asymptotisch an. Der P-Regler 27 im Steuergerät 25 der Elektromaschine 16 sieht dann keine Regelabweichung und liefert kein zusätzliches Drehmoment; die Elektromaschine 16 stellt das Lade-Sollmoment M_{Lade} ein und erzeugt damit die von der Steuerung an geforderte Ladeleistung mit hoher Genauigkeit.

Bei Lastsprüngen, z.B. durch Nebenaggregate verursacht, können der Begrenzer 20 oder die Verzögerung (Totzeitglied 11 und Verzögerungsglied 12) in der Drehmomentansteuerung des Verbrennungsmotors 10 zu einer großen Abweichung zwischen Solldrehmoment M_{VM soll} und Istdrehmoment M_{VM ist} des Verbrennungsmotors 10 führen.

Die Differenz beider Drehmomente wird mittels Bussystem 24 zum Steuergerät 25 der Elektromaschine 16 übertragen, Tiefpass gefiltert und als Differenzdrehmoment M_{VM Δ} der Elektromaschine 16 aufgeschaltet, um den Verbrennungsmotor 10 zu unterstützen. Das Tiefpassfilter 26 dämpft höherfrequente Signalanteile, die vom Proportional-Anteil des PI-Reglers 22 oder von der aktiven Ruckeldämpfung im Steuergerät 18 des Verbrennungsmotors 10 erzeugt werden. Dadurch wird das Differenzdrehmoment M_{VM Δ} im Wesentlichen vom Integral-Anteil des PI-Reglers 22 im Steuergerät 18 des Verbrennungsmotors 10 bestimmt. Der Integral-Anteil besitzt im Vergleich zu den Proportional-Anteilen eine geringere Dynamik. Eine Zeitverzögerung des Differenzdrehmomentes M_{VM Δ} durch die Übertragung über das Bussystem 24 hat damit nur geringen Einfluss auf die Stabilitätsreserve der Drehzahlregelung.

Eine Koordination 19 gibt je nach Betriebszustand die Verstärkungsfaktoren des P-Reglers 27 sowie des PI-Reglers 22 vor und initialisiert bzw. sperrt bei Bedarf den Integral-Anteil. Beim Verlassen des Betriebszustandes "Drehzahlregelung" werden die Verstärkungsfaktoren des P-Reglers 27 sowie des PI-Reglers 22 auf 0 gesetzt sowie der Integral-Anteil des PI-Reglers 22 initialisiert.

Zur aktiven Ruckeldämpfung werden die Istdrehzahlen n_{VM ist} des Verbrennungsmotors 10 bzw. n_{E ist} der Elektromaschine 16 über Differential-Elemente 23 bzw. 28 mit Verzögerung erster Ordnung zurückgeführt und auf die jeweiligen Solldrehmomente M_{VM soll} bzw. M_{E soll} aufgeschaltet. Beide Rückführungen arbeiten parallel in den jeweils optimalen Berechnungstakten und wirken gemeinsam. Sie sind nicht über das Bussystem 24 geschlossen, was geringe Zeitverzögerungen und damit hohe Bandbreiten ermöglicht. Eine Koordination 19 gibt die Verstärkungsfaktoren für das Differential-Element 23 im Steuergerät 18 des Verbrennungsmotors 10 und das Differential-Element 28 im Steuergerät 25 der Elektromaschine 16 anhand des momentanen Zustands des Antriebsstrangs vor. Die aktive Ruckeldämpfung kann im Betriebszustand "Drehzahlregelung" wahlweise abgeschaltet werden oder unterstützend wirken.

Ist, wie im Ausführungsbeispiel angenommen, das nicht dargestellte Schwungrad des Verbrennungsmotors 10 verdrehsteif mit der Elektromaschine 16 gekoppelt, so lässt sich ein gemeinsamer Drehzahlgeber 14 oder 15 für Verbrennungsmotor 10 und Elektromaschine 16 einsetzen, der synchron zum optimalen Berechnungstakt des Verbrennungsmotors 10 und zusätzlich synchron zum optimalen Berechnungstakt der Elektromaschine 16 ausgewertet wird. Bei getrennten Steuergeräten 18, 25 sind eine Geberauswertung 21 im Steuergerät 18 des Verbrennungsmotors 10 und eine weitere Geberauswertung 29 im Steuergerät 25 der Elektromaschine 16 von Vorteil.

Ist das nicht dargestellte Schwungrad des Verbrennungsmotors 10 drehelastisch mit einer Elektromaschine 16 gekoppelt, z.B. durch einen Torsionsdämpfer einer zwischen Verbrennungsmotor 10 und Elektromaschine 16 angeordneten Kupplung, so ergibt sich ein schwingungsfähiges System. Es werden getrennte Drehzahlgeber 14 und 15 für Verbrennungsmotor 10 und Elektromaschine 16 eingesetzt. Mit den erfindungsgemäßen, parallelen Rückführungen der Drehzahlen lässt sich eine Dämpfung von unerwünschten Relativschwingungen zwischen Verbrennungsmotor 10 und Elektromaschine 16 erreichen.

## Patentansprüche

1. Verfahren zum Betreiben eines Hybridfahrzeugantriebs, bei dem ein Drehmoment (M_{VM ist}) eines Verbrennungsmotors (10) und ein Drehmoment (M_{E ist}) wenigstens einer Elektromaschine (16) zu einem gemeinsamen Drehmoment (Mᵢₛₜ) des Hybridfahrzeugantriebs überlagert werden, wobei das Drehmoment (M_{VM ist}) des Verbrennungsmotors (10) durch seine Drehzahl (n_{VM ist}) oder ein daraus abgeleitetes Signal beeinflusst wird und zusätzlich ein Drehmoment (M_{E ist}) der Elektromaschine (16) durch ihre Drehzahl (n_{E ist}) oder ein daraus abgeleitetes Signal beeinflusst wird, **dadurch gekennzeichnet, dass** eine Drehzahlregelung des Verbrennungsmotors (10) mit einem Proportional-Integralregler (22) und die Drehzahlregelung der Elektromaschine (16) mit einem Proportionalregler (27) erfolgt.

2. Verfahren nach Anspruch 1, **dadurch gekennzeichnet, dass** eine Rückführung der Drehzahlen (n_{VM ist}, n_{E ist}) des Verbrennungsmotors (10) und der Elektromaschine (16) in parallelen Regelschleifen erfolgt.

3. Verfahren nach Anspruch 1 oder 2, **dadurch gekennzeichnet, dass** die Rückführung der Drehzahlen (n_{VM ist}, n_{E ist}) außerhalb eines Datenbussystems (24) erfolgt, mit dem ein Steuergerät (18) des Verbrennungsmotors (10) mit einem Steuergerät (25) der Elektromaschine (16) kommunizieren.

4. Verfahren nach Anspruch 1, **dadurch gekennzeichnet, dass** Verstärkungsfaktoren für einen jeweiligen Proportionalanteil des Proportional-Integralreglers (22) und des Proportionalreglers (27) mittels einer übergeordneten Koordination (19) eingestellt werden.

5. Verfahren nach Anspruch 4, **dadurch gekennzeichnet, dass** die Verstärkungsfaktoren anhand momentan verfügbarer Drehmomentreserven des Verbrennungsmotors (10) und/oder der Elektromaschine (16) eingestellt werden.

6. Verfahren nach einem der Ansprüche 4 oder 5, **dadurch gekennzeichnet, dass** ein Integralanteil des Proportional-Integralreglers (22) betriebszustandsabhängig initialisiert oder gesperrt wird.

7. Verfahren nach einem der Ansprüche 4 bis 6, **dadurch gekennzeichnet, dass** beim Verlassen der Drehzahlregelung die Verstärkungsfaktoren auf Null gesetzt werden und der Integralanteil initialisiert wird.

8. Verfahren nach einem der vorhergehenden Ansprüche, **dadurch gekennzeichnet, dass** zur Ruckeldämpfung die Istdrehzahlen (n_{VM ist}, n_{E ist}) von Verbrennungsmotor (10) und Elektromaschine (16) über Differential-Elemente (23, 28) mit Verzögerung erster Ordnung oder mehrfach differenzierende Elemente (23, 28) mit Verzögerung mehrfacher Ordnung zurückgeführt werden und auf die jeweiligen Solldrehmomente (M_{VM soll}, M_{E soll}) aufgeschaltet werden.

9. Verfahren nach Anspruch 8, **dadurch gekennzeichnet, dass** die Ruckeldämpfung im Betriebszustand der Drehzahlregelung wahlweise abgeschaltet oder zugeschaltet werden kann.

10. Verfahren nach Anspruch 8 oder 9, **dadurch gekennzeichnet, dass** Verstärkungen der Differential-Elemente (23, 28) mit Verzögerung erster Ordnung oder Verstärkungen der mehrfach differenzierenden Elemente (23, 28) mit Verzögerung mehrfacher Ordnung mittels einer übergeordneten Koordination (19) abhängig vom Zustand des Antriebsstrangs eingestellt werden.

11. Verfahren nach einem der vorhergehenden Ansprüche, **dadurch gekennzeichnet, dass** zur Unterstützung des Verbrennungsmotors (10) durch die Elektromaschine (16) ein aus Solldrehmoment (M_{VM soll}) und Istdrehmoment (M_{VM ist}) des Verbrennungsmotors (10) gebildetes Differenzdrehmoment (M_{VM Δ}) über einen Tiefpassfilter (26) das Drehmoment (M_{E ist}) der Elektromaschine (16) beeinflusst.

## Claims

1. Method for operating a hybrid vehicle drive, in which a torque (M_{VM act}) of an internal combustion engine (10) and a torque (M_{E act}) of at least one electric machine (16) are superimposed to form a common torque (M_{act}) of the hybrid vehicle drive, wherein the torque (M_{VM act}) of the internal combustion engine (10) is influenced by its rotational speed (n_{VM act}) or a signal derived therefrom, and in addition a torque (M_{E act}) of the electric machine (16) is influenced by its rotational speed (n_{E act}) or a signal derived therefrom, **characterized in that** the rotational speed of the internal combustion engine (10) is controlled with a proportional-integral controller (22) and the rotational speed of the electric machine (16) is controlled with a proportional controller (27).

2. Method according to Claim 1, **characterized in that** the rotational speeds (n_{VM act}, n_{E act}) of the internal combustion engine (10) and the electric machine (16) are fed back in parallel control loops.

3. Method according to Claim 1 or 2, **characterized in that** the rotational speeds (n_{VM act}, n_{E act}) are fed back outside a data bus system (24) by means of which a control unit (18) of the internal combustion engine (10) communicates with a control unit (25) of the electric machine (16).

4. Method according to Claim 1, **characterized in that** boosting factors for a respective proportional component of the proportional-integral controller (22) and of the proportional controller (27) are set by means of superordinate coordination (19).

5. Method according to Claim 4, **characterized in that** the boosting factors are set on the basis of instantaneously available torque reserves of the internal combustion engine (10) and/or of the electric machine (16).

6. Method according to either of Claims 4 and 5, **characterized in that** an integral component of the proportional-integral controller (22) is initialised or disabled as a function of the operating state.

7. Method according to one of Claims 4 to 6, **characterized in that** when the rotational speed control is exited, the boosting factors are set to zero, and the integral component is initialised.

8. Method according to one of the preceding claims, **characterized in that**, for the purpose of damping jolts, the actual rotational speeds (n_{VM act}, n_{E act}) of the internal combustion engine (10) and electric machine (16) are fed back via differential elements (23, 28) with deceleration of the first order or multiply differentiating elements (23, 28) with deceleration of a multiple order, and are connected to the respective setpoint torques (M_{VM setp}, M_{E setp}).

9. Method according to Claim 8, **characterized in that** the damping of jolts can be optionally switched off or switched on in the rotational speed control operating state.

10. Method according to Claim 8 or 9, **characterized in that** boosting of the differential elements (23, 28) with deceleration of the first order or boosting of the multiply differentiating elements (23, 28) with deceleration of a multiple order is set by means of superordinate coordination (19) as a function of the state of the drive train.

11. Method according to one of the preceding claims, **characterized in that** in order to assist the internal combustion engine (10) by means of the electric machine (16), a differential torque (M _{VM Δ}), which is formed from the setpoint torque (M _{VM setp}) and the actual torque (M _{VM act}) of the internal combustion engine (10), influences the torque (M _{E act}) of the electric machine (16) via a low-pass filter (26).

## Revendications

1. Procédé pour faire fonctionner un entraînement de véhicule hybride, dans lequel un couple (M_{VM_ist}) d'un moteur à combustion interne (10) et un couple (M_{E_ist}) d'au moins une machine électrique (16) sont superposés pour donner un couple commun (Mist) de l'entraînement de véhicule hybride, le couple (M_{VM_ist}) du moteur à combustion interne (10) étant influencé par sa vitesse de rotation (n_{VM_ist}) ou par un signal dérivé de celle-ci et en outre un couple (M_{E_ist}) de la machine électrique (16) étant influencé par sa vitesse de rotation (n_{E_ist}) ou un signal dérivé de celle-ci, **caractérisé en ce qu'**une régulation de la vitesse de rotation du moteur à combustion interne (10) s'effectue avec un régulateur proportionnel-intégral (22) et la régulation de la vitesse de rotation de la machine électrique (16) s'effectue avec un régulateur proportionnel (27).

2. Procédé selon la revendication 1, **caractérisé en ce qu'**un renvoi des vitesses de rotation (n_{VM_ist}, n_{E_ist}) du moteur à combustion interne (10) et de la machine électrique (16) s'effectue en boucles de régulation parallèles.

3. Procédé selon la revendication 1 ou 2, **caractérisé en ce que** le renvoi des vitesses de rotation (n_{VM_ist}, n_{E_ist}) s'effectue à l'extérieur d'un système de bus de données (24) avec lequel un appareil de commande (18) du moteur à combustion interne (10) communique avec un appareil de commande (25) de la machine électrique (16).

4. Procédé selon la revendication 1, **caractérisé en ce que** des facteurs d'amplification sont ajustés pour une partie proportionnelle respective du régulateur proportionnel-intégral (22) et du régulateur proportionnel (27) au moyen d'une coordination d'ordre supérieur (19).

5. Procédé selon la revendication 4, **caractérisé en ce que** les facteurs d'amplification sont ajustés à l'aide de réserves de couple disponibles temporairement du moteur à combustion interne (10) et/ou de la machine électrique (16).

6. Procédé selon l'une quelconque des revendications 4 ou 5, **caractérisé en ce qu'**une partie intégrale du régulateur proportionnel-intégral (22) est initialisée ou bloquée en fonction de l'état de fonctionnement.

7. Procédé selon l'une quelconque des revendications 4 à 6, **caractérisé en ce que** les facteurs d'amplification, lorsque la régulation de vitesse de rotation est terminée, sont remis à zéro et la partie intégrale est initialisée.

8. Procédé selon l'une quelconque des revendications précédentes, **caractérisé en ce que** pour l'amortissement des secousses, les vitesses de rotation instantanées (n_{VM_ist}, n_{E_ist}) du moteur à combustion, interne (10) et de la machine électrique (16) sont reconduites par le biais d'éléments différentiels (23, 28) avec temporisation de premier ordre, ou d'éléments à différentielles multiples (23, 28), avec temporisation de plusieurs ordres, et appliquées aux couples de consigne respectifs (M_{VM_soll}, M_{E_soll}).

9. Procédé selon la revendication 8, **caractérisé en ce que** l'amortissement des secousses peut être déconnecté ou connecté au choix dans l'état de fonctionnement de la régulation de la vitesse de rotation.

10. Procédé selon la revendication 8 ou 9, **caractérisé en ce que** des amplifications des éléments différentiels (23, 28) avec temporisation de premier ordre ou des amplifications des éléments à différentielles multiples (23, 28) avec temporisation de plusieurs ordres sont ajustées au moyen d'une coordination d'ordre supérieur (19) en fonction de l'état de la chaîne cinématique.

11. Procédé selon l'une quelconque des revendications précédentes, **caractérisé en ce que** pour assister le moteur à combustion interne (10) avec la machine électrique (16), un couple différentiel (M_{VM_Δ}) formé du couple de consigne (M_{VM_soll}) et du couple instantané (M_{VM_ist}) du moteur à combustion interne (10) influence, par le biais d'un filtre passe-bas (26), le couple (M_{E_ist}) de la machine électrique (16).
